# EUROPÄISCHE PATENTSCHRIFT

(11) **EP 1 673 619 B1**
(45) Veröffentlichungstag und Bekanntmachung des Hinweises auf die Patenterteilung: **28.07.2010**
(21) Anmeldenummer: 04787259.3
(22) Anmeldetag: 30.09.2004
(51) Int. Cl.: G01N 27/419

(54) **SENSORELEMENT FÜR EINEN MESSFÜHLER**
SENSOR ELEMENT FOR A PROBE
ELEMENT CAPTEUR POUR UNE SONDE DE MESURE

(30) Priorität: 09.10.2003 DE 10346858
(43) Veröffentlichungstag der Anmeldung: 28.06.2006
(73) Patentinhaber: ROBERT BOSCH GMBH, 70442 Stuttgart (DE)
(72) Erfinder: RIEGEL, Johann, 74321 Bietigheim-Bissingen (DE); DIEHL, Lothar, 70839 Gerlingen (DE)
(86) Internationale Anmeldenummer: PCT/EP2004/052372
(87) Internationale Veröffentlichungsnummer: WO 2005/036159

(56) Entgegenhaltungen:
- EP-A- 1 348 950
- DE-A- 19 937 016
- DE-A- 19 941 051
- US-A- 5 686 654
- US-A- 5 804 699

## Beschreibung

### Stand der Technik

Die Erfindung geht aus von einem Sensorelement für einen Messfühler zur Bestimmung der Konzentration einer Gaskomponente in einem Gasgemisch, insbesondere der Sauerstoffkonzentration im Abgas von Brennkraftmaschinen, nach dem Oberbegriff des Anspruchs 1.

Ein bekanntes Sensorelement für eine sog. Breitband-Lambdasonde (DE 199 41 051 A1) weist einen aus Festelektrolytschichten zusammengesetzten Sensorkörper auf, in dem ein mit dem Abgas über eine Diffusionsbarriere in Verbindung stehender Hohl- oder Messraum und ein von einem Referenzgas beaufschlagter Referenzgaskanal ausgebildet sind. Eine Pumpzelle zum Pumpen von Sauerstoff in den Hohlraum hinein (fettes Abgas) oder aus dem Messraum heraus (mageres Abgas) umfasst eine auf dem Festelektrolytkörper angeordnete, von einer porösen Schutzschicht abgedeckte, äußere Pumpelektrode und eine im Hohlraum angeordnete, innere Pumpelektrode. Eine Konzentrations- oder Nernstzelle umfasst eine im Messraum angeordnete Mess- oder Nernstelektrode und eine im Referenzgaskanal angeordnete Referenzelektrode. Der bei Einregeln einer konstanten Spannung von z.B. 450 mV an Nernst- und Referenzelektrode zwischen den Pumpelektroden fließende Grenzstrom ist ein Maß für den Lambdawert des Abgases. Die Empfindlichkeit dieses Sensorelements wird über den durch die Diffusionsbarriere bestimmten Grenzstrom eingestellt.

Ein solches Sensorelement besitzt eine dynamische Druckabhängigkeit, d.h. das Druckspitzen im Abgas als Ausgangssignal der Lambdasonde erscheinen, obwohl sie nicht ursächlich mit der Änderung der Gaszusammensetzung zusammenhängen. Dies ist darin begründet, dass bei Druckpulsen im Abgas eine zusätzliche Abgasmenge in den Hohlraum geschoben wird, die einen kurzen Anstieg des Betrags des positiven bzw. negativen Pumpstroms bewirkt. Besonders bei hoher Sauerstoffkonzentration (mageres Abgas) macht sich diese Partialdruckschwankung im Hohlraum aufgrund des einströmenden Abgases sehr stark bemerkbar, und die Höhe der Schwankungen der Ausgangsspannung der Lambdasonde ist proportional der Sauerstoffkonzentration bzw. dem Pumpstrom.

Weitere Sensorelemente sind aus der DE 199 37 016 und aus der US-A-5 686 654 bekannt.

### Vorteile der Erfindung

Das erfindungsgemäße Sensorelement mit den Merkmalen des Anspruchs 1 hat den Vorteil, dass durch Verzicht auf den Messraum und die Zusammenfassung der Pump- und Nernstelektrode zu einer auf der Außenfläche des Festelektrolyten angeordneten Elektrode sowie das Ausbilden der Diffusionsbarriere als eine unmittelbar die Elektrode überdeckende, feinporöse Diffusionsschicht, bei Druckerhöhungen im Gasgemisch kein zusätzlicher Gasgemisch-Einstrom auftreten kann, somit Messfehler aufgrund von Druckschwankungen im Gasgemisch vermieden werden. Im Gegensatz zu der ringförmigen Diffusionsbarriere bei dem bekannten Sensorelement kann die Diffusionsschicht sehr viel einfacher hergestellt und insbesondere ein Schichtaufbau realisiert werden. Mit einem Schichtaufbau lässt sich beispielsweise die Eintrittsfläche der feinporösen Diffusionsschicht leicht grobporös und damit vergiftungsresistent, z.B. gegen Ölaschen, ausführen. Der fehlende Mess- oder Hohlraum lässt das Bohren des Gaszutrittsloches entfallen und vermeidet ein ansonsten vorhandenes Wärmeleitungshindernis, das Rissbildung im Festelektrolyten begünstigt. Die Anordnung der Elektroden auf den Außenflächen des Festelektrolyten, also auf den beiden Großflächen des Sensorelements, ermöglicht einen guten Wärmeausgleich.

Dadurch dass die poröse Schutzschicht auf der ersten Elektrode gezielt als grobporöse Diffusionsschicht ausgelegt, wird hat das erfindungsgemäße Sensorelement darüber hinaus den Vorteil, dass die Nernstzelle wahlweise mit der ersten und zweiten Elektrode gebildet werden kann. Durch diesen Wechsel der Bezugselektrode für die Nernstzelle, also die Heranziehung zum einen der mit der feinporösen Diffusionsschicht überzogenen Elektrode und zum andern der mit der grobporöser Diffusionsschicht überzogenen Elektrode, können zwei verschiedene Grenzströme realisiert werden, so dass das Sensorelement in zwei unterschiedlichen Messbereichen betrieben werden kann. Dabei wird für Messungen, die eine geringe statische Druckabhängigkeit erfordern, die mit der grobporösen Diffusionsschicht belegte Elektrode und für Messungen, die eine geringe dynamische Druckabhängigkeit und Temperaturabhängigkeit erfordern, die mit der feinporösen Diffusionsschicht belegte Elektrode als Bezugselektrode der Nernstzelle herangezogen, z.B. durch eine Beschaltung von 450 mV relativ zur Referenzelektrode. Unter feinporös wird hier eine Diffusionsschicht verstanden, bei der bei einer Sauerstoffkonzentration im Messgas von 20% ein Grenzstrom im Bereich von 4 mA fließt. Unter grobporös wird eine solche Diffusionsschicht verstanden, bei der unter gleichen Prämissen ein Grenzstrom im Bereich um 25 mA auftritt.

Durch den Wechsel der Betriebsart können die beiden Messungen abgeglichen werden. Auch ist es möglich, durch die Messungen in beiden Betriebarten die Gasartenempfindlichkeit des Sensorelements oder dessen statische Druckabhängigkeit oder Temperaturabhängigkeit zu erkennen und durch Abgleich zu kompensieren.

Durch die in den weiteren Ansprüchen aufgeführten Maßnahmen sind vorteilhafte Weiterbildungen und Verbesserungen des im Anspruch 1 angegebenen Sensorelements möglich.

Gemäß einer vorteilhaften Ausführungsform der Erfindung sind die beiden Elektroden auf voneinander abgekehrten Seiten eines Festelektrolytkörpers angeordnet. Der Festelektrolytkörper lässt sich in einem sehr einfachen Aufbau mittels zweier dicker Festelektrolytfolien herstellen. Hierzu ist gemäß einer vorteilhaften Ausführungsform der Erfindung auf jeder Festelektrolytfolie eine Elektrode angeordnet. Die beiden Festelektrolytfolien schließen zwischen ihren von den Elektroden abgekehrten Flächen eine Isolationsschicht mit integriertem elektrischen Widerstandsheizer ein und sind über diese und einen die Isolationsschicht umschließenden Festelektrolytrahmen miteinander verbunden. Um den Innenwiderstand zwischen den als Pumpzelle fungierenden beiden Elektroden zu reduzieren, ist zwischen den beiden Festelektrolytschichten noch ein die Isolationsschicht durchdringender Festelektrolytsteg ausgebildet.

### Zeichnung

Die Erfindung ist anhand von in der Zeichnung dargestellten Ausführungsbeispielen in der nachfolgenden Beschreibung näher erläutert. Es zeigen in schematischer Darstellung:
- Fig. 1: einen Längsschnitt eines Sensorelements für einen Messfühler zur Bestimmung der Konzentration einer Gaskomponente in einem Gas- gemisch,
- Fig. 2: einen Schnitt längs der Linie II - II in Fig. 1,
- Fig. 3: einen Längsschnitt eines Sensorelements gemäß einem weiteren Ausführungsbeispiel längs der Linie III - III in Fig. 5,
- Fig. 4: einen Schnitt längs der Linie IV - IV in Fig. 3,
- Fig.: 5 einen Schnitt längs der Line V - V in Fig. 3.

### Beschreibung der Ausführungsbeispiele

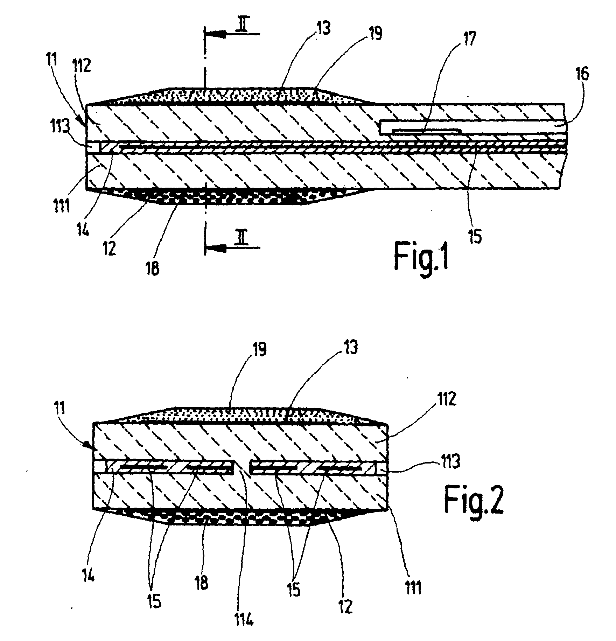

Das in Fig. 1 und 2 im Längs- und Querschnitt schematisiert dargestellte Sensorelement zur Bestimmung der Konzentration einer Gaskomponente in einem Gasgemisch, insbesondere für eine Breitband-Lambdasonde zur Bestimmung der Sauerstoffkonzentration im Abgas einer Brennkraftmaschine, weist einen Festelektrolytkörper 11 auf, auf dessen voneinander abgekehrten Seiten jeweils eine von zwei Elektroden 12, 13 angeordnet ist. Der beispielsweise aus yttriumstabilisertem Zirkoniumoxid (ZrO₂) bestehende Festelektrolytkörper 11 ist aus zwei dicken Festelektrolytfolien 111, 112 zusammengesetzt, die zwischen sich eine Isolationsschicht 14, z.B. aus Aluminiumoxid (Al₂O₃), einschließen, in der ein elektrischer Widerstandheizer 15 eingebettet ist. Die beiden Festelektrolytfolien 111, 112 sind über die Isolationsschicht 14 und einen die Isolationsschicht 14 umschließenden Festelektrolytrahmen 113 miteinander verbunden. Zusätzlich kann, wie dies in Fig. 2 dargestellt ist, noch eine über einen die Isolationsschicht 14 durchdringenden Festelektrolytsteg 114 geführte Verbindung zwischen den Festelektrolytfolien 111, 112 vorhanden sein. In der in Fig. 1 oberen Festelektrolytfolie 112 ist ein Referenzgaskanal 16 ausgebildet, der mit einem Referenzgas, z.B. Luft, beaufschlagbar ist. Im Referenzgaskanal 16 ist eine Referenzelektrode 17 auf den Festelektrolyten 11 aufgetragen.

Auf jeder von der Isolationsschicht 14 abgekehrten Außenfläche der Festelektrolytfolien 111, 112 ist eine der beiden Elektroden 12, 13 aufgebracht. Die auf der in Fig. 1 unteren Festelektrolytfolie 111 angeordnete erste Elektrode 12 ist mit einer grobporösen Diffusionsschicht 18 überzogen, während die auf der in Fig. 1 oberen Festelektrolytfolie 112 angeordnete zweite Elektrode 13 von einer feinporösen Diffusionsschicht 19 überzogen ist. Beide, mit ihrer jeweiligen Diffusionsschicht 18, 19 bedeckten Elektroden 12, 13 sind dem Gasgemisch, im Falle der Breitband-Lambdasonde dem Abgas, ausgesetzt. Die beiden Elektroden 12, 13 bilden eine Pumpzelle, über die ein von der Konzentration einer Gaskomponente, im Falle der Breitband-Lambdasonde von der Konzentration des Sauerstoffs, abhängiger Grenzstrom fließt. Eine der beiden Elektrode 12, 13 wird wahlweise als Bezugselektrode zur Referenzelektrode 17 geschaltet und bildet mit dieser eine sog. Konzentrations- oder Nemstzelle. Zur Erzeugung des in der Pumpzelle fließenden, der Konzentration der Gaskomponente proportionalen Grenzstroms ist die Nernstzelle an eine konstante Gleichspannung gelegt, z.B. 450 mV. Da die beiden Diffusionsschichten 18, 19 eine unterschiedliche Porosität aufweisen, stellt sich, je nachdem, welche der beiden Elektroden 12, 13 als Bezugselektrode zur Referenzelektrode 17 geschaltet ist, ein unterschiedlicher Grenzstrom ein, so dass mit dem Sensorelement in zwei verschiedenen Messbereichen gemessen werden kann.

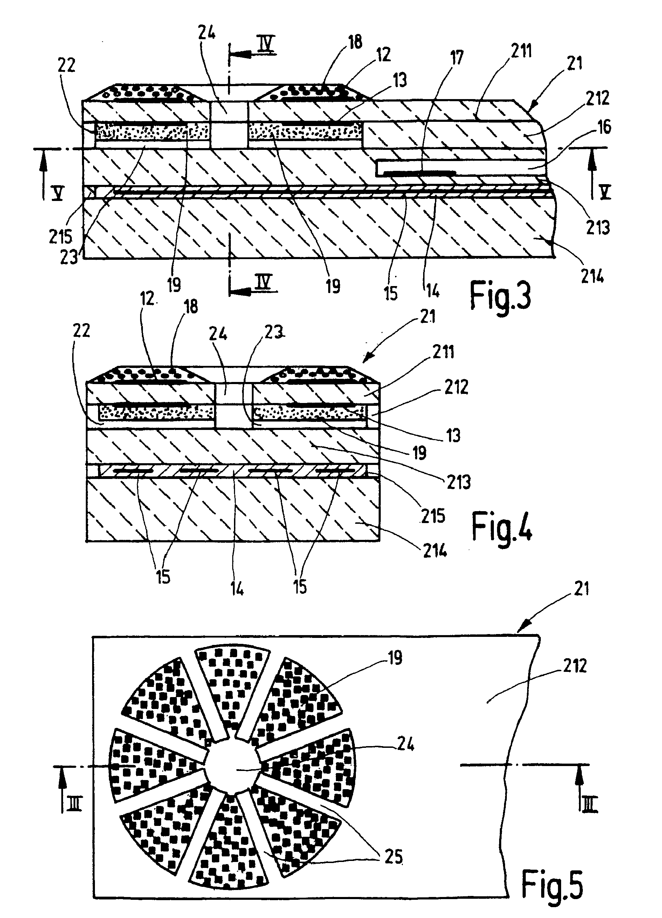

In Fig. 3 - 5 ist ein Sensorelement dargestellt, bei dem die beiden Elektroden 12, 13 nicht auf die beiden voneinander abgekehrten Großflächen des Festelektrolytkörpers 21 verteilt, sondern beide Elektroden 12, 13 auf einer Seite des Festelektrolytkörpers 21 angeordnet sind. Dies ist aus Gründen einer montageoptimierten Kontaktierung der Elektroden 12, 13 in bestimmten Anwendungsfällen von Vorteil.

Der Festelektrolytkörper 21 ist auch hier im Schichtaufbau aus Festelektrolytfolien oder Festelektrolytschichten hergestellt Die beiden Elektroden 12, 13 sind auf voneinander abgekehrten Flächen einer ersten Festelektrolytschicht 211 angeordnet. Die erste Festelektrolytschicht 211 ist über eine Zwischenschicht 212, die ebenfalls aus einem Festelektrolyten besteht, mit einer zweiten Festelektrolytschicht 213 verbunden. Die Zwischenschicht 212 ist dabei mit einer Aussparung 22 versehen, in der die der zweiten Festelektrolytschicht 213 zugekehrte, mit ihrer Diffusionsschicht überzogene Elektrode einliegt. Im Ausführungsbeispiel der Fig. 3 ist dies die mit der feinporösen Diffusionsschicht 19 überzogene, zweite Elektrode 13, jedoch kann die Verbindung der ersten Festelektrolytschicht 211 mit der zweiten Festelektrolytschicht 213 auch so erfolgen, dass die mit der grobporösen Diffusionsschicht 18 überzogene, erste Elektrode 12 in der Aussparung 22 einliegt. In beiden Fällen ist dafür Sorge getragen, dass zwischen der Diffusionsschicht 19 bzw. 18 und der Oberfläche der zweiten Festelektrolytschicht 213 ein genügend großer Freiraum 23 verbleibt, der über ein in die erste Festelektrolytschicht 211 eingebrachtes Gaszutrittsloch 24 ständig mit dem Gasgemisch bzw. dem Abgas gefüllt ist. In die zweite Festelektrolytschicht 213 ist der Referenzgaskanal 16 eingearbeitet und im Referenzgaskanal 16 wiederum die Referenzelektrode 17 angeordnet. Die zweite Festelektrolytschicht 213 schließt mit einer Trägerschicht 214, die ebenfalls aus einem Festelektrolyten bestehen kann, die Isolationsschicht 14 mit darin eingebettetem Widerstandsheizer 15 ein. Die Isolationsschicht 14 ist, wie bei dem Ausführungsbeispiel in Fig. 1 und 2, von einem Festelektrolytrahmen 215 umschlossen. Um den Freiraum 23 mechanisch zu stabilisieren, ist innerhalb der Aussparung 22 die erste Festelektrolytschicht 211 auf der zweiten Festelektrolytschicht 213 abgestützt, und zwar über Radialstege 25, die zwischen sich Segmente der Diffusionsschicht 19 bzw. 18 aufnehmen. Die Radialstege 25 bestehen ebenfalls aus einem Festelektrolyten und sind vorzugsweise einstückig mit der Zwischenschicht 212 ausgeführt.

Auch bei diesem Sensorelement sind die Diffusionsschichten 12, 13 vorzugsweise aus mehreren Lagen aufgebaut, um einen für die Elektroden 12, 13 tragbaren Grenzstrom einzustellen. Bei der feinporösen Diffusionsschicht 19 kann zusätzlich die von der zweiten Elektrode 13 abgekehrte oberste Lage, die die Eintrittsfläche der feinporösen Diffusionsschicht 13 für das Gasgemisch bzw. das Abgas bildet, leicht grobporös und damit vergiftungsresistent, z.B. gegen Ölaschen, hergestellt werden.

## Patentansprüche

1. Sensorelement für einen Messfühler zur Bestimmung der Konzentration einer Gaskomponente in einem Gasgemisch, insbesondere der Sauerstoffkonzentration im Abgas von Brennkraftmaschinen, mit zwei zusammen mit einem Festelektrolyten (11, 211) einer Pumpzelle für die Gaskomponente bildende Elektroden (12, 13), von denen eine erste Elektrode (12) über eine poröse Schutzschicht (18) dem Gasgemisch ausgesetzt ist, und mit einer am Festelektrolyten (11, 211) angeordneten, einem Referenzgas ausgesetzten Referenzelektrode (17), die mit einer Bezugselektrode (12, 13) und dem Festelektrolyten (11, 211) eine Konzentrations- oder Nernstzelle bildet, **dadurch gekennzeichnet, dass** die zweite Elektrode (13) auf ihrer vom Festelektrolyten (11, 211) abgekehrten Elektrodenfläche von einer feinporösen Diffusionsschicht (19) überzogen ist, die unmittelbar dem Gasgemisch ausgesetzt ist und dass die erste Elektrode (12) oder die zweite Elektrode (13) als Bezugselektrode der Nernstzelle herangezogen ist und dass die poröse Schutzschicht als grobporöse Diffusionsschicht (18) ausgelegt ist.

2. Sensorelement nach Anspruch 1, **dadurch gekennzeichnet, dass** die Bezugelektrode der Nernstzelle wahlweise von der ersten oder zweiten Elektrode (12, 13) gebildet ist.

3. Sensorelement nach Anspruch 1 oder 2, **dadurch gekennzeichnet, dass** die Elektroden (12, 13) auf voneinander abgekehrten Seiten eines Festelektrolytkörpers (11) angeordnet sind.

4. Sensorelement nach Anspruch 3, **dadurch gekennzeichnet, dass** der Festelektrolytkörper (11) aus zwei Festelektrolytfolien (111, 112) zusammengesetzt ist, dass auf jeder Festelektrolytfolie (111, 112) eine Elektrode (12, 13) mit Diffusionsschicht (18, 19) angeordnet ist und dass die beiden Festelektrolytfolien (111, 112) zwischen ihren von den Elektroden (12, 13) abgekehrten Flächen eine Isolationsschicht (14) mit integriertem elektrischen Widerstandsheizer (15) einschließen und über diese und einen die Isolationsschicht (14) umschließenden Festelektrolytrahmen (113) miteinander verbunden sind.

5. Sensorelement nach Anspruch 4, **dadurch gekennzeichnet, dass** zwischen den beiden Festelektrolytfolien (111, 112) ein die Isolationsschicht (14) durchdringender Festelektrolytsteg (114) ausgebildet ist.

6. Sensorelement nach Anspruch 1 oder 2, **dadurch gekennzeichnet, dass** die beiden mit jeweils ihrer Diffusionsschicht (18, 19) überzogenen Elektroden (12, 13) auf voneinander abgekehrten Seiten einer ersten Festelektrolytschicht (221) angeordnet sind, dass die erste Festelektrolytschicht (221) auf eine zweite Festelektrolytschicht (213) so aufgesetzt ist, dass zwischen der Festelektrolytschicht (213) und der ihr zugekehrten Diffusionsschicht (19) ein Freiraum (23) verbleibt, und dass der Freiraum (23) über ein die erste Festelektrolytschicht (211) durchdringendes Gaszutrittsloch (24) dem Gasgemisch ausgesetzt ist.

7. Sensorelement nach Anspruch 6, **dadurch gekennzeichnet, dass** die erste Festelektrolytschicht (211) im Bereich des Freiraums (23) durch Radialstege (25) auf der zweiten Festelektrolytschicht (213) abgestützt ist.

8. Sensorelement nach Anspruch 7, **dadurch gekennzeichnet, dass** die Radialstege (25) aus einem Festelektrolyten bestehen.

9. Sensorelement nach einem der Ansprüche 1 - 8, **dadurch gekennzeichnet, dass** mindestens die feinporöse Diffusionsschicht (19) aus mehreren aufeinanderliegenden Diffusionslagen unterschiedlicher Porosität zusammengesetzt ist.

## Claims

1. Sensor element for a measuring probe for determining the concentration of a gas component in a gas mixture, in particular the oxygen concentration in the exhaust gas of internal combustion engines, comprising two electrodes (12, 13), which, together with a solid electrolyte (11, 211), form a pumping cell for the gas component and of which a first electrode (12) is exposed to the gas mixture via a porous protective layer (18), and comprising a reference electrode (17), which is arranged on the solid electrolyte (11, 211), is exposed to a reference gas and, with a comparison electrode (12, 13) and the solid electrolyte (11, 211), forms a concentration or Nernst cell, **characterized in that** the second electrode (13) is coated on its electrode surface facing away from the solid electrolyte (11, 211) with a finely porous diffusion layer (19), which is exposed directly to the gas mixture, and **in that** the first electrode (12) or the second electrode (13) is used as the comparison electrode of the Nernst cell and **in that** the porous protective layer is designed as a coarsely porous diffusion layer (18).

2. Sensor element according to Claim 1, **characterized in that** the comparison electrode of the Nernst cell is formed optionally by the first or second electrode (12, 13).

3. Sensor element according to Claim 1 or 2, **characterized in that** the electrodes (12, 13) are arranged on sides of a solid electrolyte body (11) that are facing away from each other.

4. Sensor element according to Claim 3, **characterized in that** the solid electrolyte body (11) is made up of two solid electrolyte sheets (111, 112), **in that** an electrode (12, 13) with a diffusion layer (18, 19) is arranged on each solid electrolyte sheet (111, 112) and **in that** the two solid electrolyte sheets (111, 112) enclose between their surfaces that are facing away from the electrodes (12, 13) an insulating layer (14) with an integrated electrical resistance heater (15) and are connected to each other by way of this insulating layer and a solid electrolyte frame (113) enclosing the insulating layer (14).

5. Sensor element according to Claim 4, **characterized in that** a solid electrolyte web (114) penetrating the insulating layer (14) is formed between the two solid electrolyte sheets (111, 112).

6. Sensor element according to Claim 1 or 2, **characterized in that** the two electrodes (12, 13) coated with their respective diffusion layer (18, 19) are arranged on sides facing away from each other of a first solid electrolyte layer (221), **in that** the first solid electrolyte layer (221) is placed on a second solid electrolyte layer (213) in such a way that a clearance (23) remains between the solid electrolyte layer (213) and the diffusion layer (19) facing it, and **in that** the clearance (23) is exposed to the gas mixture via a gas access hole (24) penetrating the first solid electrolyte layer (211).

7. Sensor element according to Claim 6, **characterized in that** the first solid electrolyte layer (211) is supported on the second solid electrolyte layer (213) in the region of the clearance (23) by radial webs (25).

8. Sensor element according to Claim 7, **characterized in that** the radial webs (25) consist of a solid electrolyte.

9. Sensor element according to one of Claims 1-8, **characterized in that** at least the finely porous diffusion layer (19) is made up of a number of diffusion layers of differing porosity lying one on top of the other.

## Revendications

1. Elément de détection pour sonde de mesure destinée à déterminer la concentration d'un composant gazeux dans un mélange de gaz, en particulier la concentration en oxygène dans les gaz d'échappement de moteurs à combustion interne, et présentant
deux électrodes (12, 13) qui forment une cellule de pompage du composant gazeux avec un électrolyte solide (11, 211),
la première électrode (12) étant exposée au mélange de gaz par l'intermédiaire d'une couche poreuse de protection (18),
une électrode de référence (17) exposée à un gaz de référence étant disposée sur l'électrolyte solide (11, 211) et formant une cellule de concentration ou de Nernst avec une électrode de référence (12, 13) et l'électrolyte solide (11, 211),
**caractérisé en ce que**
sur sa surface non tournée vers l'électrolyte solide (11, 211), la deuxième électrode (13) est revêtue d'une couche de diffusion (19) finement poreuse exposée directement au mélange de gaz,
**en ce que** la première électrode (12) ou la deuxième électrode (13) interviennent comme électrodes de référence de la cellule de Nernst et
**en ce que** la couche poreuse de protection est conçue comme couche de diffusion (18) à porosité grossière.

2. Elément de détection selon la revendication 1, **caractérisé en ce que** l'électrode de référence de la cellule de Nernst est formée sélectivement de la première ou de la deuxième électrode (12, 13).

3. Elément de détection selon les revendications 1 ou 2, **caractérisé en ce que** les électrodes (12, 13) sont disposées sur des côtés non tournés l'un vers l'autre d'un corps (11) d'électrolyte solide.

4. Elément de détection selon la revendication 3, **caractérisé en ce que** le corps (11) en électrolyte solide est constitué de l'assemblage de deux feuilles (111, 112) d'électrolyte solide **en ce qu'**une électrode (12, 13) à couche de barrière (18, 19) est disposée sur chaque feuille (111, 112) d'électrolyte solide et **en ce que** les deux feuilles (111, 112) d'électrolyte solide enferment entre leurs surfaces non tournées vers les électrodes (12, 13) une couche isolante (14) dotée d'un dispositif électrique intégré de chauffage (15) à résistance et sont reliées l'une à l'autre par ces surfaces ainsi que par un cadre (113) d'électrolyte solide qui entoure la couche isolante (14).

5. Elément de détection selon la revendication 4, **caractérisé en ce qu'**une nervure (114) d'électrolyte solide qui traverse la couche d'isolation (14) est formée entre les deux feuilles d'électrolyte solide (111, 112).

6. Elément de détection selon les revendications 1 ou 2, **caractérisé en ce que** les deux électrodes (12, 13) revêtues de leur couche de diffusion (18, 19) sont disposées sur des côtés non tournés l'un vers l'autre d'une première couche (221) d'électrolyte solide, **en ce que** la première couche (221) d'électrolyte solide est exposée sur une deuxième couche (213) d'électrolyte solide de telle sorte qu'entre la couche (213) d'électrolyte solide et la couche de diffusion (19) tournée vers elle il reste un espace libre (23) et **en ce que** l'espace libre (23) est exposé au mélange de gaz par l'intermédiaire d'un trou de passage de gaz (24) qui traverse la première couche d'électrolyte solide (211).

7. Elément de détection selon la revendication 6, **caractérisé en ce que** dans la zone occupée par l'espace libre (23), la première couche (211) d'électrolyte solide est soutenue sur la deuxième couche (213) d'électrolyte solide par les nervures radiales (25).

8. Elément de détection selon la revendication 7, **caractérisé en ce que** les nervures radiales (25) sont constituées d'un électrolyte solide.

9. Elément de détection selon l'une des revendications 1 à 8, **caractérisé en ce que** la ou les couches de diffusion (19) à fine porosité sont constituées de l'assemblage de plusieurs couches de diffusion posées les unes au-dessus de l'autre et présentant des porosités différentes.
